# EUROPEAN PATENT SPECIFICATION

(11) **EP 0 343 109 B1**
(45) Date of publication and mention of the grant of the patent: **26.01.1994**
(21) Application number: 89810345.2
(22) Date of filing: 11.05.1989
(51) Int. Cl.: C08K 5/00, C08L 101/00

(54) **Flame retardant polymer compositions**
Flammfeste Polymerzusammensetzungen
Compositions de polymères retardatrices de flamme

(30) Priority: 20.05.1988 GB 8811995
(43) Date of publication of application: 23.11.1989
(73) Proprietor: FMC CORPORATION (UK) LIMITED, Manchester M17 1WT (GB)
(72) Inventor: Bentley, Robert Leonard, Dr., Urmston Manchester M31 2QJ (GB)
(74) Representative: Hamilton, Raymond

(56) References cited:
- EP-A- 247 828
- EP-A- 0 245 207
- WO-A-85/05372

## Description

The present invention relates to flame retardant polymer compositions containing phosphonic acid salts.

Polymers, particularly halogen-free polymers, are commonly made more flame retardant by incorporating therein a phosphorus-containing compound, a halogen-containing compound or a mixture thereof. Some polymers are processed at high temperatures of, for example, 250°C or higher, and many known flame retardants are not suitable under these conditions because they are too volatile, or not sufficiently thermally stable.

EP-A-0245207 describes and claims composition comprising a halogen-free polymer and a) as flame retardant at least one metal or metalloid salt of a phosphonic acid of the general formula I 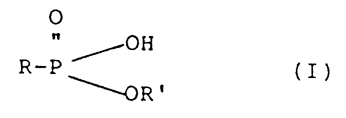
in which R is a straight or branched chain alkyl group having 1 to 3 carbon atoms optionally substituted by one or more halogen atoms or hydroxyl groups; and R' is H or an alkyl group having 1 to 3 carbon atoms and wherein the metal or metalloid is selected from Groups IIA, IIB, IIIA, IVA and VA of the "Periodic" Chart of Elements (Fisher Scientific Company c 1968).

We have now found that the impact strength of these compositions is improved if a carboxylic acid or salt is incorporated as well as the phosphonic acid salts.

WO-A-85/05372 describes resin compositions comprising one or more polyphenylene ether resins, one or more polyamide resins and one or more polycarboxylic acids such as citric acid or malic acid or their salts with amines, alkali metals or alkaline earth metals. Incorporation of the polycarboxylic acid or salt is said to improve various characteristics, including impact strength.

From EP-A-0 247 828 it is known that when a metal salt of a copolymer of an α-olefin and an α,β-unsaturated carboxylic acid is added to certain copolyesters, the impact resistance of shaped articles made from the copolyesters is increased.

Accordingly the present invention provides a composition comprising a halogen-free polymer and a) as flame retardant at least one metal or metalloid salt of a phosphonic acid of the general formula I 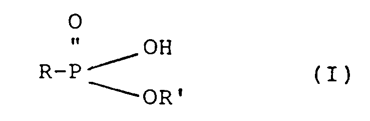
in which R is a straight or branched chain alkyl group having 1 to 3 carbon atoms optionally substituted by one or more halogen atoms or hydroxyl groups; and R' is H or an alkyl group having 1 to 3 carbon atoms and wherein the metal or metalloid is selected from Groups IIA, IIB, IIIA, IVA and VA of the "Periodic" Chart of Elements (Fisher Scientific Company c 1968) and b) monocarboxylic acid or a metal or metalloid salt thereof, the metal or metalloid being selected from Groups I, IIA, IIB, IIIA, IVA and VA of the Periodic Chart of Elements (above).

Halogen atoms in alkyl groups R, R' in I above are e.g. fluorine, bromine and chlorine atoms. The following are mentioned as haloalkyl groups R: chloromethyl, bromomethyl, trifluoromethyl, dichloromethyl, dibromomethyl, 2-chloroethyl, 1-chloropropyl and 1-bromopropyl. Alkyl groups R substituted by hydroxyl groups are preferably such groups substituted by one hydroxyl group such as, e.g. hydroxymethyl, 2-hydroxyethyl and 3-hydroxypropyl.

Preferably R represents unsubstituted C₁-C₃ alkyl but most preferably R is methyl.

R' is preferably hydrogen or methyl. The metal or metalloid in the phosphoric acid salt may be, for example, magnesium, calcium, barium, zinc, boron, aluminium, tin, or antimony. Preferably the metal is magnesium or aluminium, most preferably aluminium.

Particularly preferred are compositions wherein R and R' are each methyl and the metal is aluminium.

The salt may be a simple ionic compound formed between anions of the phosphonic acid and cations of the metal or metalloid.

Where R' is H and the metal of metalloid has a valency greater than one, the salt may have a polymeric structure as represented by the general formula II 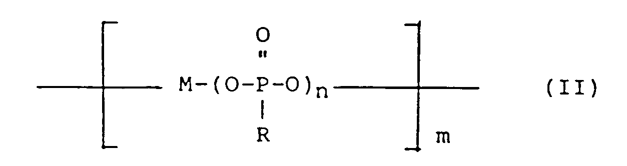
where R is as defined above, M is the metal or metalloid, n has a value one less than the valency of M and m is from 2 to 100 and where each group 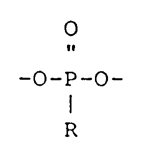
is attached to M atoms only.
The monocarboxylic acid may contain from 4 to 30 C atoms and may be a linear or branched alkyl, aralkyl or aryl carboxylic acid. Examples of such acids are butanoic , hexanoic, 2-ethylhexanoic, octanoic, decanoic, dodecanoic, stearic, phenylacetic, benzoic and naphthoic acids, especially stearic acid.

Where the carboxylic acids are used in the form of their metal or metalloid salts, suitable cations include lithium, magnesium, calcium, barium, zinc, boron, aluminium, tin or antimony.

The amount of phosphonic acid salt added to the polymer as a flame retardant may be varied over a wide range. Usually from 0.1 to 100 parts by weight are used per 100 parts by weight of polymer. Preferably there are used 0.5 to 30 parts and, most preferably, from 2 to 20 parts by weight per 100 parts by weight of polymer. The optimum amount used depends on the nature of the polymer and the actual salt used and may be readily determined by simple experiment.

The phosphonic acids salts may be used in various physical forms depending on the polymer used and the desired properties. For instance the salts may be ground to a finely divided form to enable better dispersion throughout the polymer. Also mixtures of different salts may be used if desired.

The carboxylic acid or metal or metalloid salt can be used in an amount of from 1 to 10 parts, preferably 2 to 6 parts by weight based on 100 parts by weight or resin.

The carboxylic acid or salt can be added separately to the formulation along with the other ingredients prior to compounding or alternatively may be premixed with or coated onto the metal or metalloid salt of the phosphonic acid flame retardant or other ingredient of the formulation.

Accordingly the present invention also provides a composition comprising at least one metal or metalloid salt of a phosphonic acid of the general formula I 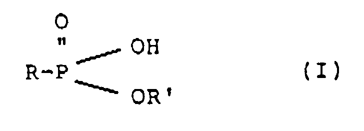
in which R is a straight or branched chain alkyl group having 1 to 3 carbon atoms optionally substituted by one or more halogen atoms or hydroxyl groups; and R' is H or an alkyl group having 1 to 3 carbon atoms and wherein the metal or metalloid is selected from Groups IIA, IIB, IIIA, IVA and VA of the "Periodic" Chart of Elements (Fisher Scientific Company c 1968) and a monocarboxylic acid or a metal or metalloid salt thereof, the metal or metalloid being selected from Groups I, IIA, IIB, IIIA, IVA and VA of the Periodic Chart of Elements (above).

Examples of polymers which may be rendered flame retardant are:
1. Polyphenylene oxides and sulfides, and blends of these polymers with polystyrene graft polymers or styrene copolymers such as high impact polystyrene, EPDM copolymers with rubbers, as well as blends or polyphenylene oxide with polyamides and polyesters.
2. Polyurethanes which are derived from polyethers, polyesters or polybutadiene with terminal hydroxyl groups on the one side and aliphatic, cycloaliphatic or aromatic polyisocyanates on the other side including polyisocyanurates, as well as precursors thereof.
3. Polyamides and copolyamides which are derived from diamines and dicarboxylic acids and/or from aminocarboxylic acids or the corresponding lactams, such as polyamide 4, polyamide 6, polyamide 6/6, polyamide 6/10, polyamide 11, polyamide 12, poly-2,4,4-trimethylhexamethylene terephthalamide or poly-m-phenylene iso-phthalamide, as well as copolymers thereof with polyethers, such as for instance, with polyethylene glycol, polypropylene glycol or polytetramethylene glycols.
4. Polyesters which are derived from dicarboxylic acids and di-alcohols and/or from hydroxycarboxylic acids or the corresponding lactones, such as polyethylene terephthalate, polybutylene terephthalate, poly-1,4-dimethylol-cyclohexane terephthalate and polyhydroxybenzoates as well as block-copolyether-esters derived from polyethers having hydroxyl end groups.
5. Unsaturated polyester resins which are deived from copolyesters or saturated and unsaturated dicarboxylic acids with polyhydric alcohols and vinyl compounds as cross-linking agents.
6. Polystyrene.
7. Graft copolymers of styrene, such as, for example, styrene on polybutadiene, styrene and acrylonitrile on polybutadiene, styrene and alkyl acrylates or methacrylates on polybutadiene, styrene and acrylonitrile on polyacrylates or polymethacrylates, styrene and acrylonitrile or acrylate/butadiene copolymes, as well as mixtures thereof with random copolymers of styrene or α-methylstyrene with dienes or acrylic derivatives, for instance the terpolymers of styrene known as ABS, MBS, ASA or AES terpolymers.
8. Cross-linked epoxide resins which are derived from polyepoxides, for example, from bis-glycidyl ethers, especially bisphenol A diglycidyl ethers, or from cycloaliphatic diepoxides.
9. Polycarbonates.

The polymer is preferably a polyphenylene oxide or sulphide, or a blend thereof with a polystyrene graft polymer or a styrene copolymer.

The compositions of the invention may also contain other conventional ingredients, such as heat stabilisers, light stabilisers, ultra-violet light absorbers, anti-oxidants, anti-static agents, preservatives, adhesion promoters, fillers, pigments, lubricants, blowing agents, fungicides, plasticisers, processing aids, other fire-retardant additives and smoke suppressants.

Other fire retardant additives which may be used with the phosphonic acid salts include phosphorus containing esters and salts such as triaryl phosphates, alkyl aryl phosphates and ammonium polyphosphate, halogen, especially bromine- and chlorine-containing compounds such as decabromo diphenyl ether, hexachlorocyclopentadiene, brominated polystyrene, haloalkyl phosphate and phosphonate esters, antimony oxide, hydrated alumina, bismuth oxide, molybdenum oxide, or mixtures of these compounds with zinc and/or magnesium oxide or salts.

The invention is illustrated by the following Examples.

### Examples 1 to 4

Compositions are made comprising a polymer blend of polyphenylene oxide (PPO) and high impact polystyrene (HIPS), and aluminium methyl methylphosphonate.

The ingredients are dry blended in a high-speed blender and extruded using a Baker-Perkins twin screw extruder. The resulting polymer is compression moulded to give plaques which are cut into test pieces. The Izod impact strength is determined according to the method given in ASTM D256.

The improvement in impact strength obtained by incorporation of the carboxylic acids or salts thereof is shown by reference to Examples 2 to 4 compared to Example 1 which is a formulation without the impact strength improvement additives.

| Formulation parts by wt. | Example No. | | | |
|---|---|---|---|---|
| | 1 | 2 | 3 | 4 |
| PPO ¹ | 35 | 35 | 35 | 35 |
| HIPS ² | 65 | 65 | 65 | 65 |
| Aluminium Methyl ³ Methylphosphonate | 10 | 10 | 10 | 10 |
| Irganox ® 1010 ⁴⁾ | 0.2 | 0.2 | 0.2 | 0.2 |
| Stearic Acid | - | 2 | - | - |
| Calcium stearate | - | - | 3 | - |
| Zinc stearate | - | - | - | 3 |
| | - | - | - | - |
| Notched Izod Impact strength (J m⁻¹) | 82 | 96 | 124 | 99 |
| Notes: 1. Polyphenylene oxide 2. High impact grade of polystyrene 3. Prepared according to method in European Patent Application 0245207 4. Stabiliser, Trade mark of Ciba-Geigy AG | | | | |

## Claims

1. A composition comprising a halogen-free polymer and as a) flame retardant at least one metal or metalloid salt of a phosphonic acid of the general formula I 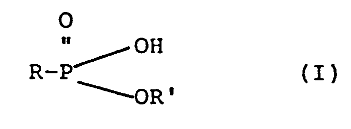 in which R is a straight or branched chain alkyl group having 1 to 3 carbon atoms optionally substituted by one or more halogen atoms or hydroxyl groups; and R' is H or an alkyl group having 1 to 3 carbon atoms and wherein the metal or metalloid is selected from Groups IIA, IIB, IIIA, IVA and VA of the "Periodic" Chart of Elements (Fisher scientific Company c 1968) and b) a monocarboxylic acid or a metal or metalloid salt thereof, the metal or metalloid being selected from Groups I, IIA, IIB, IIIA, IVA and VA of the periodic Chart of Elements.

2. A composition as claimed in claim 1 in which R represents unsubstituted C₁-C₃ alkyl.

3. A composition as claimed in claim 2 in which R represents methyl.

4. A composition as claimed in claim 1 in which R' represents hydrogen or methyl.

5. A composition as claimed in claim 1 in which the metal or metalloid in the phosphonic acid salt is magnesium, calcium, barium, zinc, boron, aluminium, tin or antimony.

6. A composition as claimed in claim 1 in which R and R' are both methyl and the metal is aluminium.

7. A composition as claimed in claim 1 in which the monocarboxylic acid has 4 to 30 C atoms and is linear or branched alkyl, aralkyl or aryl carboxylic acid.

8. A composition as claimed in claim 7 in which the carboxylic acid is butanoic, hexanoic, 2-ethylhexanoic, octanoic, decanoic, dodecanoic, stearic, phenylacetic, benzoic or naphthoic acid.

9. A composition as claimed in any of claims 1 to 8 in which the carboxylic acid is in the form of a salt with lithium, magnesium, calcium, barium, zinc, boron, aluminium, tin or antimony.

10. A composition as claimed in any preceding claim in which the amount of phosphonic acid salt is from 0.1 to 100 parts by weight per 100 parts by weight of polymer.

11. A composition as claimed in claim 10 in which the amount of salt is from 0.5 to 30 parts by weight per 100 parts by weight of polymer.

12. A composition as claimed in claim 11 in which the amount of salt is from 2 to 20 parts by weight per 100 parts by weight of polymer.

13. A composition as claimed in any of claims 1 to 12 in which the amount of carboxylic acid or salt thereof is from 1 to 10 parts by weight per 100 parts by weight of polymer.

14. A composition as claimed in claim 13 in which the amount of carboxylic acid or salt thereof is from 2 to 6 parts by weight per 100 parts by weight of polymer.

15. A composition as claimed in any of claims 1 to 14 in which the polymer is a polyphenylene oxide or sulphide, or a blend thereof with a polystyrene graft polymer or a styrene copolymer.

16. A composition comprising at least one metal or metalloid salt of a phosphonic acid of the general formula I 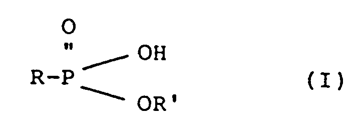 in which R is a straight or branched chain alkyl group having 1 to 3 carbon atoms optionally substituted by one or more halogen atoms or hydroxyl groups; and R' is H or an alkyl group having 1 to 3 carbon atoms and wherein the metal or metalloid is selected from Groups IIA, IIB, IIIA, IVA and VA of the "Periodic" Chart of Elements (Fisher Scientific Company c 1968) and a monocarboxylic acid or a metal or metalloid salt thereof, the metal or metalloid being selected from Groups I, IIA, IIB, IIIA, IVA and VA of the Periodic Chart of Elements.

## Patentansprüche

1. Zusammensetzung, umfassend ein halogenfreies Polymer und
a) als flammfestes Mittel mindestens ein Metall- oder Metalloidsalz einer Phosphonsäure der allgemeinen Formel I 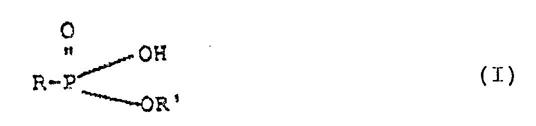 in der R ein gegebenenfalls mit einem oder mehreren Halogenatomen oder Hydroxylgruppen substituierter linearer oder verzweigter Alkylrest mit 1 bis 3 Kohlenstoffatomen ist und R' ein Wasserstoffatom oder ein Alkylrest mit 1 bis 3 Kohlenstoffatomen ist und wobei das Metall oder Metalloid aus den Gruppen IIA, IIB, IIIA, IVA und VA des Periodensystems der Elemente (Fisher Scientific Company ⓒ 1968) ausgewählt ist und
b) eine Monocarbonsäure oder ihr Metall oder Metalloidsalz, wobei das Metall oder Metalloid aus den Gruppen I, IIA, IIB, IIIA, IVA und VA des Periodensystems der Elemente ausgewählt ist.

2. Zusammensetzuung nach Anspruch 1, in der R ein unsubstituierter C₁-C₃-Alkylrest ist.

3. Zusammensetzung nach Anspruch 2, in der R eine Methylgruppe ist.

4. Zusammensetzung nach Anspruch 1, in der R' ein Wasserstoffatom oder eine Methylgruppe ist.

5. Zusammensetzung nach Anspruch 1, in der das Metall oder Metalloid in dem Phosphonsäuresalz Magnesium, Calcium, Barium, Zink, Bor, Aluminium, Zinn oder Antimon ist.

6. Zusammensetzung nach Anspruch 1, in der R und R' jeweils eine Methylgruppe sind und das Metall Aluminium ist.

7. Zusammensetzung nach Anspruch 1, in der die Monocarbonsäure 4 bis 30 Kohlenstoffatome aufweist und eine lineare oder verzweigte Alkyl-, Aralkyl- oder Arylcarbonsäure ist.

8. Zusammensetzung nach Anspruch 7, in der die Carbonsäure Butansäure, Hexansäure, 2-Ethylhexansäure, Octansäure, Decansäure, Dodecansäure, Stearinsäure, Phenylessigsäure, Benzoe- oder Naphthoesäure ist.

9. Zusammensetzung nach einem der Ansprüche 1 bis 8, in der die Carbonsäure in Form ihres Lithium-, Magnesium, Calcium-, Barium-, Zink-, Bor-, Aluminium-, Zinn- oder Antimonsalzes vorliegt.

10. Zusammensetzung nach einem der vorstehenden Ansprüche, in der die Menge des Phosphonsäuresalzes 0,1 bis 100 Gew.-Teile pro 100 Gew.-Teile des Polymers beträgt.

11. Zusammensetzung nach Anspruch 10, in der die Menge des Salzes 0,5 bis 30 Gew.-Teile pro 100 Gew.-Teile des Polymers beträgt.

12. Zusammensetzung nach Anspruch 11, in der die Menge des Salzes 2 bis 20 Gew.-Teile pro 100 Gew.-Teile des Polymers beträgt.

13. Zusammensetzung nach einem der Ansprüche 1 bis 12, in der die Menge der Carbonsäure oder ihres Salzes 1 bis 10 Gew.-Teile pro 100 Gew.-Teile des Polymers beträgt.

14. Zusammensetzung nach Anspruch 13, in der die Menge der Carbonsäure oder ihres Salzes 2 bis 6 Gew.-Teile pro 100 Gew.-Teile des Polymers beträgt.

15. Zusammensetzung nach einem der Ansprüche 1 bis 14, in der das Polymer ein Polyphenylenoxid oder -sulfid oder ein Gemisch davon mit einem Polystyrolpfropfpolymer oder einem Styrolcopolymer ist.

16. Zusammensetzung, umfassend mindestens ein Metall oder Metalloidsalz einer Phosphonsäure der allgemeinen Formel I 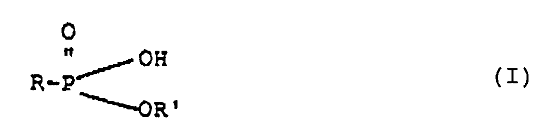 in der R eine gegebenenfalls mit einem oder mehreren Halogenatomen oder Hydroxylgruppen substituierter linearer oder verzweigter Alkylrest mit 1 bis 3 Kohlenstoffatomen ist und R' ein Wasserstoffatom oder eine Alkylgruppe mit 1 bis 3 Kohlenstoffatomen ist und wobei das Metall oder Metalloid aus den Gruppen IIA, IIB, IIIA, IVA und VA des Periodensystems der Elemente (Fisher Scientific Company ⓒ 1968) ausgewählt ist, und eine Monocarbonsäure oder ihr Metall- oder Metalloidsalz, wobei das Metall oder Metalloid aus den Gruppen I, IIA, IIB, IIIA, IVA und VA des Periodensystems der Elemente ausgewählt ist.

## Revendications

1. Composition comprenant un polymère exempt d'halogène et a) comme retardateur de flamme au moins un sel métallique ou métalloïdique d'un acide phosphonique de formule générale I 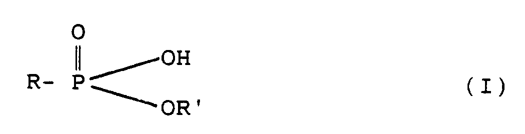 où R est un groupe alkyle à chaîne linéaire ou ramifiée ayant 1 à 3 atomes de carbone éventuellement substitué(s) par un ou plusieurs atome(s) d'halogène ou groupe(s) hydroxyle ; et R' est H ou un groupe alkyle ayant 1 à 3 atomes de carbone, et dans laquelle le métal ou le métalloïde est choisi parmi les groupes IIA, IIB, IIIA, IVA et VA du tableau périodique des éléments (*Fischer Scientific Company* c 1968), et b) un acide monocarboxylique ou un sel métallique ou métalloïdique de celui-ci, le métal ou le métalloïde étant choisi parmi les groupes I, IIA, IIB, IIIA, IVA et VA du tableau périodique des éléments.

2. Composition selon la revendication 1, dans laquelle R représente un groupe alkyle en C₁ à C₃ non substitué.

3. Composition selon la revendication 2, dans laquelle R représente un groupe méthyle.

4. Composition selon la revendication 1, dans laquelle R' représente un hydrogène ou un groupe méthyle.

5. Composition selon la revendication 1, dans laquelle le métal ou le métalloïde dans le sel d'acide phosphonique est le magnésium, le calcium, le baryum, le zinc, le bore, l'aluminium, l'étain ou l'antimoine.

6. Composition selon la revendication 1, dans laquelle R et R' sont tous les deux un groupe méthyle et le métal est l'aluminium.

7. Composition selon la revendication 1, dans laquelle l'acide monocarboxylique a 4 à 30 atomes de carbone et est un acide alkyl, aralkyl ou arylcarboxylique linéaire ou ramifié.

8. Composition selon la revendication 7, dans laquelle l'acide carboxylique est l'acide butanoïque, hexanoïque, 2-éthylhexanoïque, octanoïque, décanoïque, dodécanoïque, stéarique, phénylacétique, benzoïque ou naphtoïque.

9. Composition selon l'une quelconque des revendications 1 à 8, dans laquelle l'acide carboxylique est sous la forme d'un sel avec le lithium, le magnésium, le calcium, le baryum, le zinc, le bore, l'aluminium, l'étain ou l'antimoine.

10. Composition selon l'une quelconque des revendications précédentes, dans laquelle la quantité de sel d'acide phosphonique est de 0,1 à 100 parties en poids pour 100 parties en poids de polymère.

11. Composition selon la revendication 10, dans laquelle la quantité de sel est de 0,5 à 30 parties en poids pour 100 parties en poids de polymère.

12. Composition selon la revendication 11, dans laquelle la quantité de sel est de 2 à 20 parties en poids pour 100 parties en poids de polymère.

13. Composition selon l'une quelconque des revendications 1 à 12, dans laquelle la quantité d'acide carboxylique ou d'un sel de celui-ci est de 1 à 10 parties en poids pour 100 parties en poids de polymère.

14. Composition selon la revendication 13, dans laquelle la quantité d'acide carboxylique ou d'un sel de celui-ci est de 2 à 6 parties en poids pour 100 parties en poids de polymère.

15. Composition selon l'une quelconque des revendications 1 à 14, dans laquelle le polymère est un oxyde ou un sulfure de polyphénylène, ou un mélange de celui-ci avec un polymère de polystyrène greffé ou un copolymère de styréne.

16. Composition comprenant au moins un sel métallique ou métalloïdique d'un acide phosphonique de formule générale I 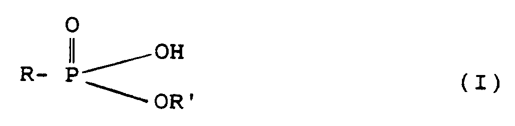 où R est un groupe alkyle à chaîne linéaire ou ramifiée ayant, 1 à 3 atomes de carbone éventuellement substitué(s) par un ou plusieurs atome(s) d'halogène ou groupe(s) hydroxyle ; et R' est H ou un groupe alkyle ayant 1 à 3 atomes de carbone, et dans laquelle le métal ou le métalloïde est choisi parmi les groupes IIA, IIB, IIIA, IVA et VA du tableau périodique des éléments (*Fischer Scientific Company* c 1968), et un acide monocarboxylique ou un sel métallique ou métalloïdique de celui-ci, le métal ou le métalloïde étant choisi parmi les groupes I, IIA, IIB, IIIA, IVA et VA du tableau périodique des éléments.
